# EUROPEAN PATENT APPLICATION

(11) **EP 0 689 121 A1**
(43) Date of publication of application: **27.12.1995**
(21) Application number: 95304186.0
(22) Date of filing: 16.06.1995
(51) Int. Cl.: G06F 1/16

(54) **A docking device for a portable computer**

(30) Priority: 20.06.1994 JP 136968/94
(71) Applicant: International Business Machines Corporation, Armonk, N.Y. 10504 (US)
(72) Inventor: Usui, Hideyuki, Chigasaki-shi, Kanagawa-ken (JP); Noguchi, Hiroyuki, Fujisawa-shi, Kanagawa-ken (JP); Yonemochi, Kenshin, Kamakura-shi, Kanagawa-ken (JP)
(74) Representative: Horner, David Richard

(57) **Abstract**

According to the invention, a docking device is provided which allows two or more types of portable computers to be mounted on the docking device for use. The invention provides a docking device for providing electrical connections to a portable computer 14 mountable on the docking device, comprising: a main body portion 20; a retractable connector 26 for providing the electrical connections to said portable computer 14, said connector 26 being rotatably supported by said main body portion 20; and a handling means 48, 56, 60 for rotating said connector 26 between a connectable position where said connector is connectable with said portable computer 14 and a retracted position where said connector 26 is located so as to avoid contact between the connector 26 and a portable computer 12, 14 mounted on the docking device. In preferred embodiments, connector 24 for personal computer 12 is attached to the body 20 of the docking device. On support surface 22A of housing 22 a pair of guide members 30 is formed to extend along the direction of projection of connector 24 and to slidably support a flat tray 28 on which the personal computer 12 is mountable. In another position of the body 20, the connector 26 is supported for personal computer 14 which has a different and smaller size than personal computer 12.

## Description

### Field of the Invention

This invention relates to a docking device for mounting and electrically connecting portable computers to enable expansion of the functions of such computers.

### Description of the Prior Art

It is known in the art to use a computer docking device (also called a docking station) having a bay structure which has space for accommodating fixed or detachable memory and the like, for expanding functions of portable computers.

Such a computer docking device (hereinafter also called a docking device) incorporates devices having, for example, a small computer system interface (SCSI), an interface of integrated device electronics (IDE), and an AT bus card or board on which an expansion bus is formed, capable of connecting other devices such as those for communications, so that it is possible to allow a portable computer to have equivalent functions to those of desktop type personal computers.

However, there has not been provided such a docking device upon which can be mounted either one of two or more types of portable computers having different sizes.

If either one of two or more types of portable computers with different sizes were to be mounted on a docking device, it would be necessary to electrically connect each portable computer to the docking device. This would require the docking device to use a structure having a number of connectors that accommodate respective types of portable computers. However, if a number of connectors are simply disposed on the docking device, it is likely that when a specific portable computer is mounted on the device, the connectors other than those which must be connected to that portable computer would prevent the mounting of the portable computer, or alternatively contact of the portable computer with such connectors might damage them.

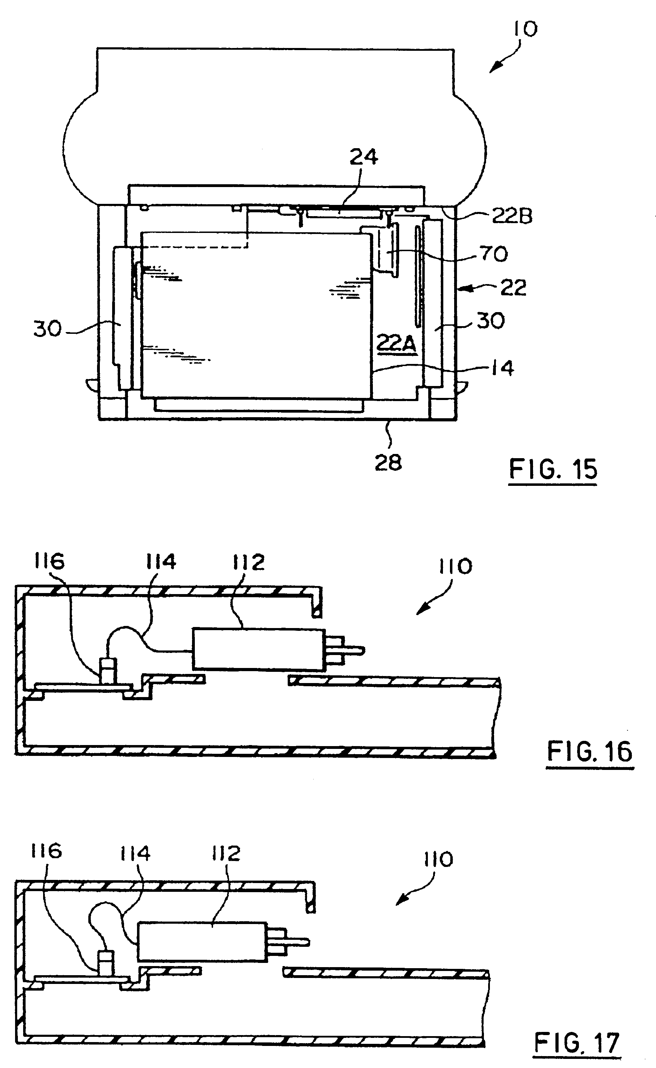

For such cases, referring now to Fig. 16, there is shown connector 112 which protrudes from within docking device 110. As shown in Fig. 17, connector 112 may be linearly moved backward so that it no longer protrudes from the docking device 110. However, with such a structure where the connector 112 is simply moved linearly backward, the amount of movement of connector 112 must be large and the strength of coupling of the connector may prove unreliable. In addition, such a structure, coupled with a large amount of movement of connector 112, forces the cable 114, containing many wires bundled for connecting connector 112 and connector 116 within the docking device 110, to bend, as shown in Fig. 17. This could damage cable 114.

If two or more types of portable computers are to be connected to the docking device as described above, it will be required to decouple each of these portable computers from the docking device after operation on the device is ended. Decoupling each portable computer from the docking device requires an eject mechanism for each type of portable computer. Incorporating a number of eject mechanisms in the docking device will complicate the structure and increase the cost of manufacturing the docking device.

Given the aforementioned facts, it is an object of the present invention to provide a docking device for a portable computer upon which can be mounted two or more types of portable computers.

### Disclosure of the Invention

Accordingly the present invention provides a docking device for providing electrical connections to a portable computer mountable on the docking device, comprising: a main body portion; a retractable connector for providing the electrical connections to said portable computer, said connector being rotatably supported by said main body portion; and a handling means for rotating said connector between a connectable position where said connector is connectable with said portable computer and a retracted position where said connector is located so as to avoid contact between the connector and a portable computer mounted on the docking device.

In preferred embodiments the docking device further comprises: a plurality of connectors corresponding to two or more types of said portable computers, said plurality of connectors each being attached to said main body portion and being connectable with respective ones of said portable computers, at least one of said plurality of connectors being said retractable connector; a tray supported on said main body portion and adapted to receive said two or more types of portable computers, the tray being reciprocally mounted for movement between a docking position where one of said portable computers is connected with a corresponding one of said plurality of connectors, and a decoupling position where that portable computer is disconnected from the corresponding one of said plurality of connectors.

Further, in preferred embodiments, said plurality of connectors are attached to said main body portion at different positions from each other along the direction of movement of said tray, said retractable connector being projected a longer distance than other ones of said connectors along the direction of movement of said tray.

Preferably, at least one of said plurality of connectors is provided with an eject means which interlocks with an eject mechanism provided in said main body portion to decouple the corresponding portable computer from that connector.

In preferred embodiments, the docking device further comprises: a first detection means for detecting the status of said retractable connector; and a second detection means for detecting the mounting on said tray of one of said portable computers which is not connectable with said retractable connector, an alarm being generated in this instance if the first detection means indicates that said retractable connector is in the connectable position.

The invention provides a docking device for portable computers which compensates for the difference in size of portable computers to permit coupling of two or more types of portable computers of different sizes by using a structure having a retractable connector. Further, the preferred embodiment of the present invention provides a docking device for portable computers which uses one simple eject mechanism to allow decoupling of two or more types of portable computers of different sizes.

The operation of the portable computer docking device according to the present invention will now be described below.

The portable computer docking device is electrically connectable with a portable computer to expand the functions of the portable computer.

The device body of the portable computer docking device rotatably supports the base end of a connector which is connectable with the portable computer. A handling means is provided for rotating the connector between a connectable position where the connector is connectable with the portable computer and a retracted position where the connector preferably disappears into the device body by external operation, thereby avoiding contact between the connector and a portable computer mounted on the docking device.

Thus, the connector can be rotated and retracted into the device body unless it is to be connected with a corresponding type of portable computer. When a portable computer which is incompatible with the connector is used, the connector can be retracted to prevent the portable computer from making contact with the connector, thus avoiding the connector from impeding the connection, or from being damaged.

Unlike a structure for linearly moving the connector, the present invention uses a structure for rotating the connector to retract it. This eliminates the necessity for a large amount of movement of the connector, a possible decrease of coupling strength, or unwanted bending of the cable connecting the connector to the device body.

According to preferred embodiments of the invention, a plurality of connectors, which can be connected with different types of portable computers, are attached to the device body of the portable computer docking device. A tray on which a portable computer is mountable slides between a docking position where a portable computer corresponding to one of these connectors is connected and a decoupling position where the portable computer is decoupled from the connector.

Since different types of portable computers may be mounted on the portable computer docking device and electrically connected with the connector without using a separate means of attachment, a number of portable computers of different types and sizes can be readily used with the portable computer docking device.

Different types of portable computers each can be mounted on the tray which slides on the device body. That is, the tray guides a portable computer to a correct position, thus allowing the computer to be connected with the connector attached to the device body.

Prior art docking devices have a drawback in that, when a portable computer is mounted on a docking device, the portable computer is moved across the supporting surface of the docking device during connection with the connector of the docking device, that surface being in frictional contact with the bottom surface of the computer. Such movement can result in damage to the docking device or portable computer, for example by the coating thereon being stripped. In accordance with the portable computer docking device of the preferred embodiment, this problem is resolved since the tray slides on the device body.

According to the docking device of the preferred embodiment, the connector can be retracted into the device body unless it is connected with a corresponding type of portable computer among a plurality of portable computer types. When a portable computer is used which is not compatible with the connector, retracting the connector will prevent the portable computer from contacting the connector, thus avoiding the connector from being an impediment or from being damaged.

In preferred embodiments, the docking device has a structure in which the positions where a plurality of connectors are attached to the device body are different from each other along the sliding direction of the tray, and in which the retractable connector is disposed along the sliding direction of the tray so as to protrude a longer distance than other connectors.

In this way, if the connector disposed in a protruded manner is for accommodating a small size portable computer, and is to be retracted into the device body, another portable computer of a different size will not be inadvertently in contact with this connector.

Preferably, at least one of a plurality of connectors is provided with an eject means which interlocks with an eject mechanism incorporated in the device body for decoupling a portable computer from the device body. By this approach, a portable computer, regardless of its type, size, or the like, can be decoupled from the device body with the same operation of the eject mechanism.

In preferred embodiments, a first detection means detects the retract operation of the retractable connector and a second detection means detects the mounting on the tray of a portable computer to be connected with a connector other than the retractable connector.

Therefore, even when a portable computer which is incompatible with the retractable connector is mounted on the tray with the retractable connector protruding out of the device body, these first and second detection means would detect this state and generate an alarm sound. Accordingly, even if a portable computer having a different size is mounted on the portable computer docking device, the user is warned that the connection should not be made, and this should prevent the user from inadvertently contacting the connector with the personal computer.

### Brief description of the drawings

The present invention will be described further, by way of example only, with reference to a preferred embodiment thereof as illustrated in the accompanying drawings, in which:
Fig. 1 is an isometric view of an A4 size notebook type personal computer mounted on a portable computer docking device in accordance with the preferred embodiment of the invention;
Fig. 2 is a top plan view of the A4 size notebook type personal computer mounted on the portable computer docking device in accordance with the embodiment of the invention, illustrating a tray located at a decoupling position;
Fig. 3 is a top plan view of the A4 size notebook type personal computer mounted on the portable computer docking device in accordance with the embodiment of the invention, illustrating a tray located at a docking position;
Fig. 4 is an isometric view of the subnote type personal computer mounted on the portable computer docking device in accordance with the embodiment of the invention;
Fig. 5 is a top plan view of the subnote type personal computer mounted on the portable computer docking device in accordance with the embodiment of the invention, illustrating a tray located at the decoupling position;
Fig. 6 is a top plan view of the subnote type personal computer mounted on the portable computer docking device in accordance with the embodiment of the invention, illustrating the tray located at the docking position;
Fig. 7 is a cross-sectional view, taken along line 7-7 in Fig. 1, of the portable computer docking device;
Fig. 8 is a cross-sectional view, taken along line 8-8 in Fig. 4, of the portable computer docking device;
Fig. 9 is an isometric view of the major portion of the portable computer docking device in accordance with the embodiment of the invention, illustrating a connector located at a retracted position;
Fig. 10 is an isometric view of the major portion of the portable computer docking device in accordance with the embodiment of the invention, illustrating the connector located at a connectable position;
Fig. 11 is an isometric view of the major portion of the portable computer docking device in accordance with the embodiment of the invention, illustrating eject blocks being projected;
Fig. 12 is an isometric view of the A4 size notebook type personal computer mounted on the portable computer docking device in accordance with the embodiment of the invention, illustrating the connector being located at the connectable position;
Fig. 13 is a top plan view of the A4 size notebook type personal computer mounted on the portable computer docking device in accordance with the embodiment of the invention, illustrating the connector being located at the connectable position;
Fig. 14 is an isometric view of the subnote type personal computer mounted on the portable computer docking device in accordance with the embodiment of the invention, illustrating the connector being located at the retracted position;
Fig. 15 is a top plan view of the subnote type personal computer mounted on the portable computer docking device in accordance with the embodiment of the invention, illustrating the connector being located at the retracted position;
Fig. 16 is a cross-sectional view of a conventional portable computer docking device, illustrating a connector being projected; and
Fig. 17 is a cross-sectional view of the conventional portable computer docking device, illustrating the connector being retracted into the device.

### Description of the Preferred Embodiment

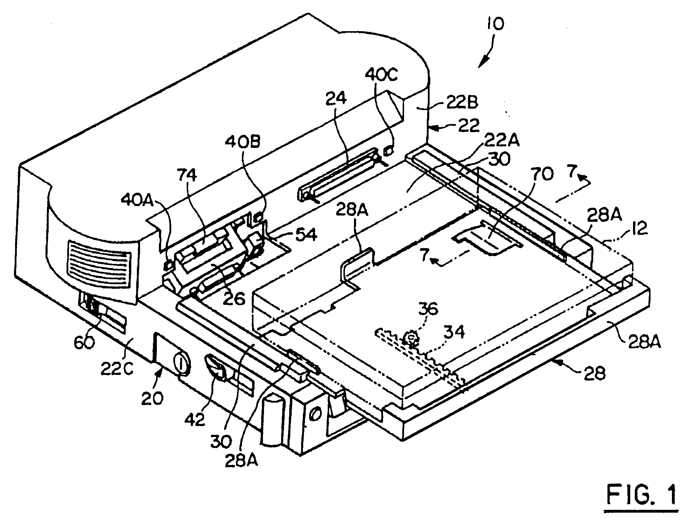

Referring now to Fig. 1, there is shown a portable computer docking device 10 in accordance with the preferred embodiment of the present invention.

Docking device 10 includes a body 20 incorporating extensions such as AT bus card (not shown), and a housing 22 which encloses the body 20. Body 20 and housing 22 form a device body which makes up the main portion of the docking device 10.

Attached to body 20 is a connector 24 for A4-size notebook type personal computers (hereinafter called personal computer) 12, which are an example of portable computers. Connector 24 protrudes from side wall 22B which is upstanding with respect to support surface 22A of housing 22 enclosing body 20. Formed on support surface 22A of housing 22 is a pair of guide members 30, this pair extending along a direction of the depth of body 20 which is also the direction of protrusion of connector 24. Slidably supported on the pair of guide members 30 is a flat tray 28 on which personal computer 12 is mountable.

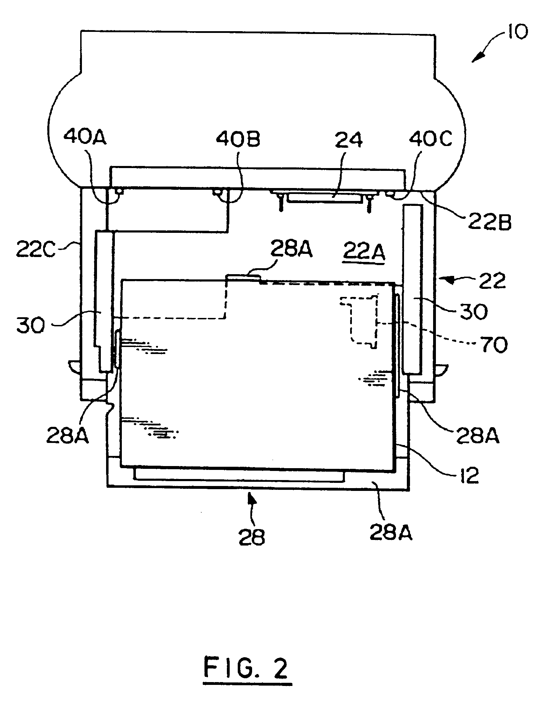

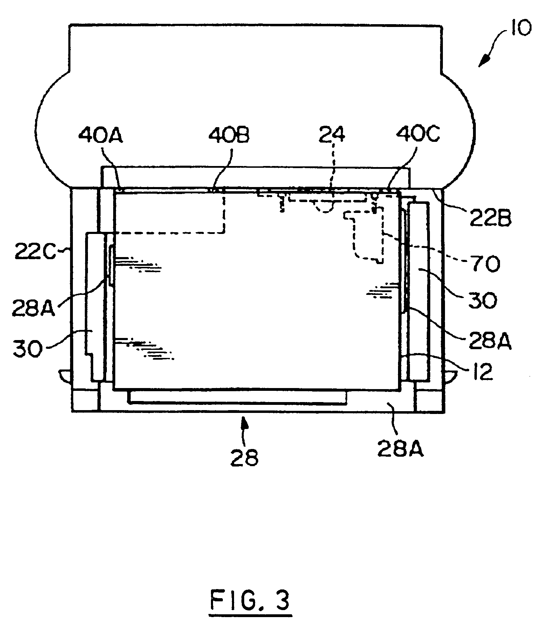

Tray 28 will slide between a decoupling position where personal computer 12 is decoupled from connector 24, as shown in Fig. 2, and a docking position where personal computer 12 is connected with connector 24, as shown in Fig. 3.

At a periphery of the upper surface of tray 28, there is formed a projecting guide wall 28A for positioning personal computer 12 on tray 28. Personal computer 12 will thus be fixed on tray 28 by the use of this guild wall 28A.

Between tray 28 and body 20, there is provided a coil spring (not shown) for urging tray 28 toward a position as shown in Fig. 1. Rack 34 is affixed to tray 28 so as to extend in the direction of the sliding movement of tray 28. Body 20 has a built-in damper (not shown) having pinion 36 which mates with rack 34.

The coil spring acts to force tray 28 to extend toward the front (lower right side of Fig. 1) of body 20. Then, pinion 36 which mates with rack 34 will turn slowly due to a resistance of the damper, thereby preventing abrupt movement of tray 28 from support surface 22A.

Three eject pins 40A, 40B, and 40C are supported in housing 22 so that they can project from side wall 22B. Eject lever 42 is provided in side wall 22C of housing 22 so that the eject lever is linked with eject pins 40A, 40B, and 40C within body 20 for projecting the pins from body 20.

By moving eject lever 42 along side wall 22C of housing 22, eject pins 40A, 40B, and 40C are ejected from wall 22B. Eject pins 40A, 40B, and 40C, eject lever 42, and a mechanism linking these members (not shown) form an eject mechanism.

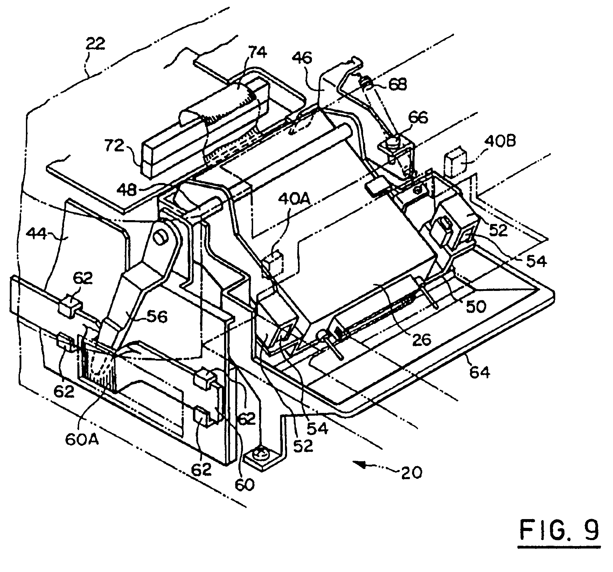

Referring now to Fig. 9, to the left-hand side of body 20 is fixed the bottom end of a pair of frame plates 44 and 46 extending vertically. An axis of rotation 48 is rotatably supported by frame plates 44 and 46 to link them. Support fixture 50 having a C-shaped section is affixed to the axis of rotation 48. Support fixture 50 supports connector 26 for a subnote type personal computer 14 (hereinafter called a personal computer 14), a portable computer which is smaller than and has a different size from the personal computer 12.

At one end of the axis of rotation 48 is secured the base end of rotating lever 56. The tipped end of rotating lever 56 mates with U-shaped mating portion 60A provided in the central portion of rotating lever 60, which is movably guided in the horizontal direction with two pairs of guide members 62 formed on frame plate 44. Guide members 62 serve to guide operating lever 60 to move on frame plate 44. As operating lever 60 is moved, rotating lever 56 is rotated, which in turn rotates axis of rotation 48. This causes the connector 26 to be rotated round its base side together with support fixture 50. Thus, a handling means is formed of device members including axis of rotation 48, rotating lever 56, and operating lever 60, and is linked with connector 26 for rotating it.

Holding cover 64 is affixed to body 20 so as to be disposed below support fixture 50. Another frame plate 46 has a stopper screw 66 fixed thereto.

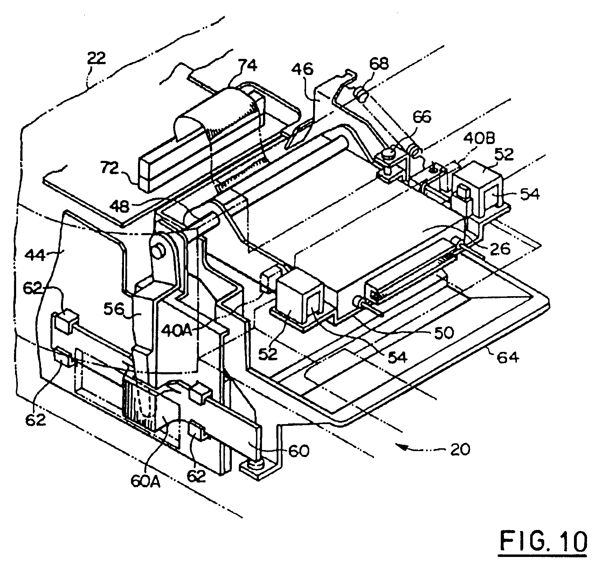

Therefore, when the upper side of support fixture 50 is rotated downward, it contacts and stops at holding cover 64, and a stop position below support fixture 50 is determined. When the upper side of support fixture 50 is rotated upward, it contacts and stops at stopper screw 66, which is affixed to flame plate 46, and thereby a stop position is established above support fixture 50 where connector 26 is disposed substantially in the horizontal direction. The lower stop position where the top end of connector 26 is down, as shown in Fig. 9, becomes a retracted position for retracting connector 26 into housing 22, and the upper stop position where the top end of connector 26 is up, as shown in Fig. 10, becomes a connectable position where connector 26 can be connected with personal computer 14.

Connector 26 at the connectable position is disposed in a more projected fashion than connector 24 along the sliding direction of tray 28.

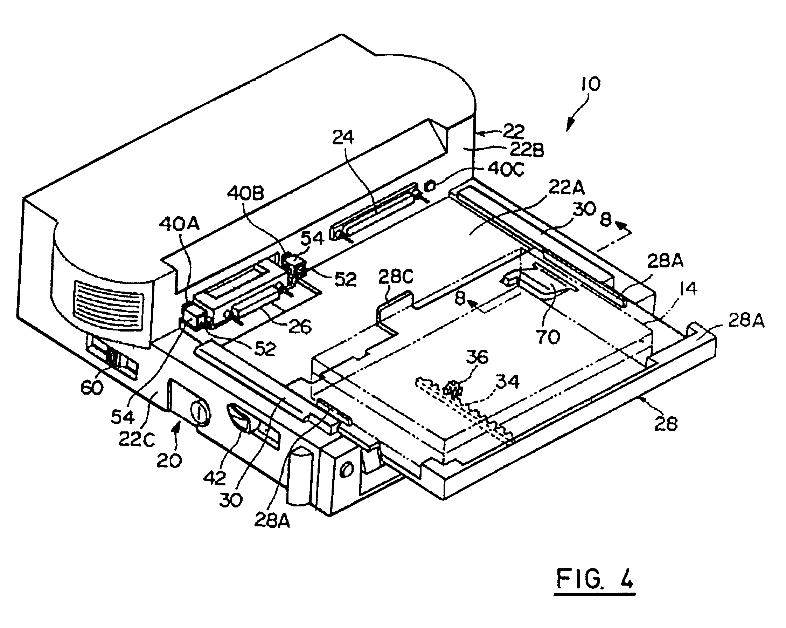

With connector 26 located at the connectable position, when personal computer 14 is mounted on tray 28 and is moved thereon, as shown in Figs. 4 to 6, personal computer 14 will be connected with connector 26.

Coil spring 68 has one end attached to the frame plate 46 which supports the axis of rotation 48, and has another end attached to support fixture 50, causing the upper side of support fixture 50 to be always actuated so as to be pulled toward its base end.

When support fixture 50 is rotated up to the connectable position, as shown in Fig. 10, the upper side of support fixture 50 will be further actuated so as to be pushed upward. When support fixture 50 is rotated to the retracted position, as shown in Fig. 9, the upper side of support fixture 50 will be further actuated so as to be pushed downward. This function serves to prevent unintentional rotation of support fixture 50 and connector 26.

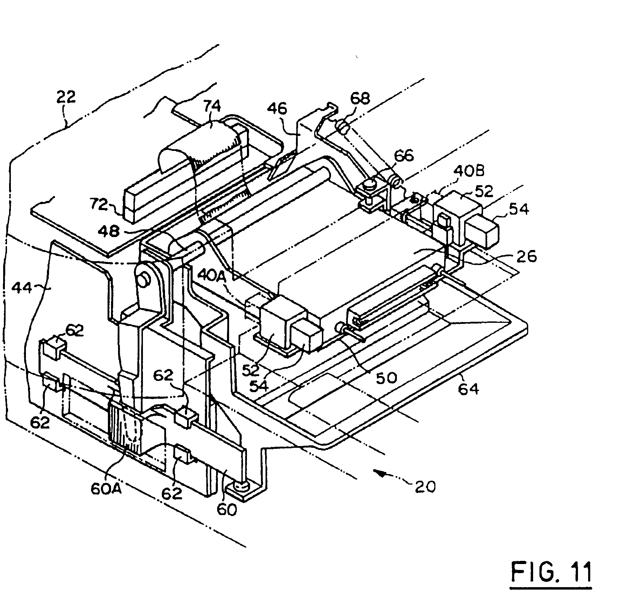

Support frames 52 are provided at positions corresponding to eject pins 40A and 40B in the left and central portion of the housing, respectively, as well as corresponding to right and left ends of support fixture 50. In these support frames 52, eject blocks 54 are movably supported between the positions shown in Figs 10 and 11. Eject blocks 54 are eject means interlocked with the eject mechanism for decoupling the personal computer 14 from connector 26 of docking device 10, and are biased by coil springs (not shown) so that eject blocks 54 stop at the position shown in Fig. 10.

Thus, when connector 26 is in the connectable position and eject pins 40A and 40B project from side wall 22B, eject blocks 54 are pushed from the rear by eject pins 40A and 40B and project a longer distance than support frames 52, as shown in Fig. 11.

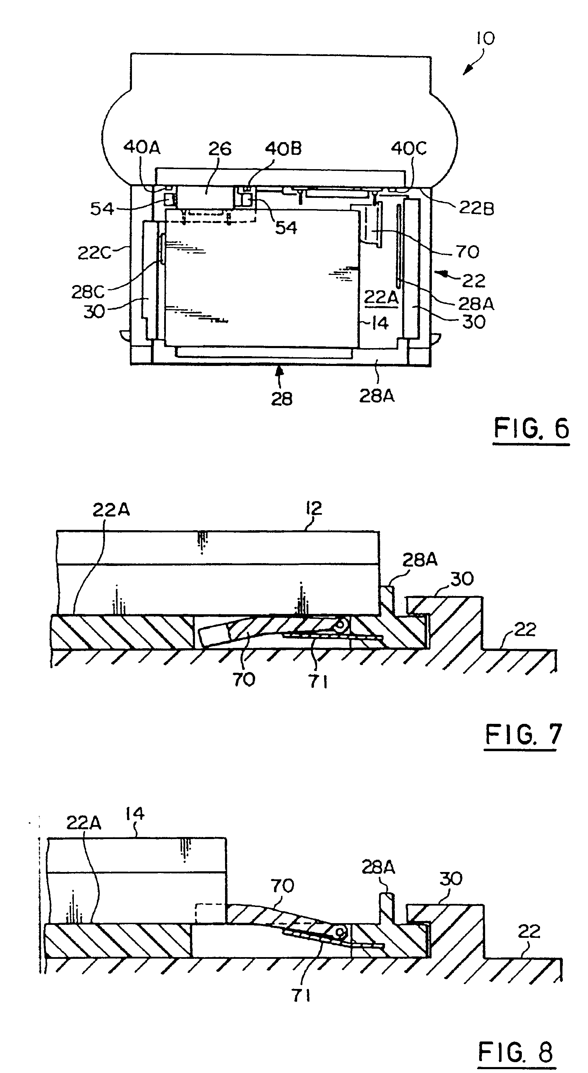

Additionally, the holding cover 64 has a switch (not shown) as a first detection means provided for detecting the status of connector 26. The switch turns on when connector 26 is in the connectable position. As a second detection means for detecting the mounting of personal computer 12 on tray 28 to be connected with connector 24, there is provided a switch 70 which is supported by a leaf spring 71 and also acts as a guide for a periphery of personal computer 14. As shown in Figs. 1 and 7, when personal computer 12 is mounted on tray 28, the switch 70 is pushed to be activated. As shown in Figs. 4 and 8, when personal computer 14 is mounted on tray 28, the switch 70 is released, and hence deactivated. When both the switch of holding cover 64 and switch 70 turn on, an alarm sound will be generated.

Cable 74 consisting of many bundled wires extends from the base end of the connector 26 to the connector 72 provided in body 20. Like connector 24, connector 26 is electrically connected with body 20 through cable 74. As the connector 26 rotates in unison with the axis of rotation 48 when the axis of rotation 48 is rotated, the looseness of the cable 74 slightly changes.

The operation of the preferred embodiment will now be described. A plurality of connectors 24 and 26 are attached to the body 20 of docking device 10, respectively. Connector 24, in these connectors 24 and 26, is electrically connectable with personal computer 12, and connector 26 is electrically connectable with personal computer 14, for expanding the functions of these personal computers 12 and 14.

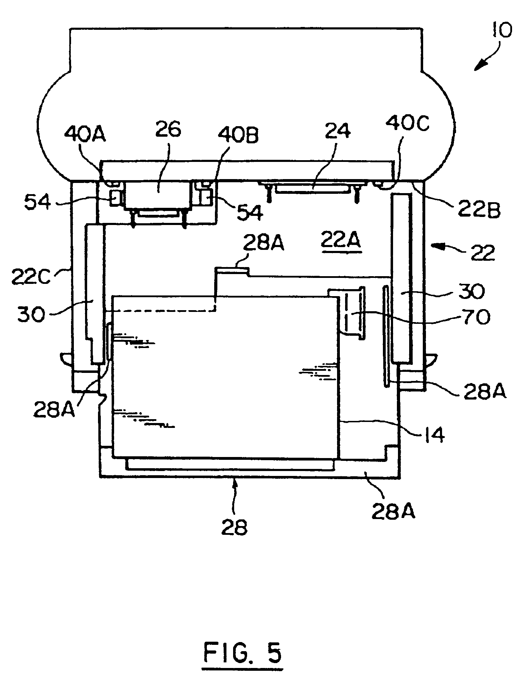

To allow personal computers 12 and 14 to be connected with and disconnected from corresponding connectors 24 and 26, respectively, a tray 28 on which a respective one of the personal computers 12 and 14 is mountable slides between the decoupling position shown in Figs. 2 and 5 and the docking position shown in Figs. 3 and 6.

Therefore, personal computers 12 and 14 or different types of portable computers are selectively mounted and electrically connected with connectors 24 and 26, respectively, of docking device 10. That is, docking device 10 allows different types of personal computers 12 and 14 having different sizes to be used.

As shown in Figs. 1 and 4, since each personal computer 12 and 14 is able to be mounted on the tray 28 which slides toward or away from housing 22, personal computers 12 and 14 can be guided via the tray 28 to the proper position for connection with connectors 24 and 26.

Conventionally a portable computer, when being mounted on a docking device, is subjected under friction at its bottom surface to move across the support surface of the docking device to be coupled with the connector of the device. This has been the cause of damage to the docking device or portable computer, and stripping of the coating thereon. In accordance with the preferred embodiment of the present invention, these drawbacks are eliminated by use of tray 28, which is slidable toward or away from the connectors 24, 26 on the major body 20, for mounting personal computers 12 and 14.

Frame plates 44 and 46 of body 20 rotatably support the base end side of the connector 26 via support fixture 50 to permit rotation of the connector 26 between the connectable position (shown in Fig. 10), where the connector 26 can be connected with the personal computer 14, and the retracted position (shown in Fig. 9) where the connector 26 can be retracted in the body 20 through the use of the operating lever 60 by the user.

In this manner, connector 26 can be rotated and retracted into body 20 unless it is connected with a personal computer 14 of corresponding type. This means that when personal computer 12 of a larger size than personal computer 14 is used, personal computer 12 will not contact connector 26, thus ensuring that connector 26 does not impede connection and is not itself exposed to damage.

That is, since connector 26, which is so located as to protrude for accommodating personal computer 14 (which is a small size portable computer), can be retracted within the body 20, a personal computer 12 of a different size will be prevented from making undesired contact with connector 26.

Moreover, unlike a structure for linearly moving the connector, the mechanism of the preferred embodiment rotates connector 26 to and from its retracted position within the body 20, thus avoiding an increased amount of movement of connector 26, a decreased strength of coupling, or forced bending of cable 74.

When personal computer 12 is to be disconnected from body 20, the user moves eject lever 42, and eject pins 40A, 40B, and 40C will be projected from side wall 22B. Then, personal computer 12 is released from connector 24, and a coil spring acts to move tray 28 to the decoupling position, as shown in Fig. 2.

Similarly, when personal computer 14 is to be disconnected from body 20, the user moves eject lever 42 and eject pins 40A, 40B, and 40C will be projected from side wall 22B. This in turn projects eject blocks 54, being pushed at the rear sides by eject pins 40A and 40B, from support frames 52, and releases personal computer 14 from connector 26. Then, the coil spring acts to move tray 28 to the decoupling position, as shown in Fig. 5.

Since eject blocks 54 compensate for the difference in size, the same operation on the eject mechanism allows personal computer 14 to be decoupled from the body 20, irrespective of difference in size or type of personal computer.

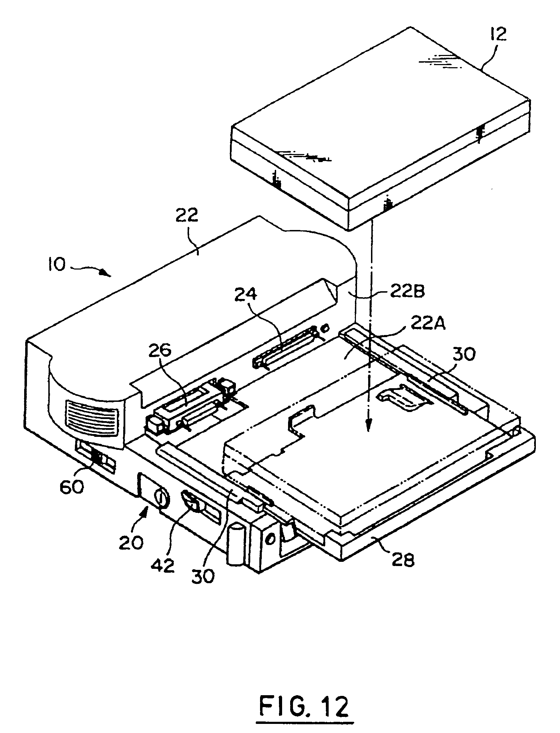

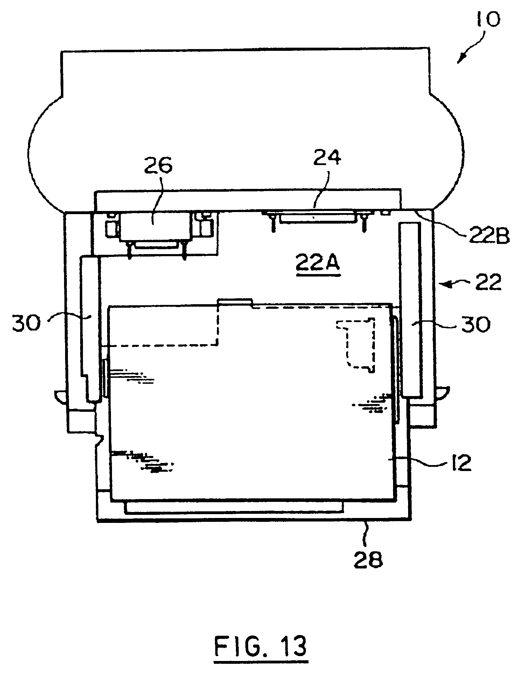

When connector 26 is in the connectable position, as shown in Figs. 12 and 13, and if the user tries inadvertently to mount personal computer 12 on tray 28, switch 70 is pushed by personal computer 12 to turn on and an alarm sound is generated, since the switch of holding cover 64 is also turned on. The alarm is used to indicate operation errors. Consequently, the user is warned that personal computer 12 is of a different size to that which should be used with connector 26, and hence this should prevent the user from bringing the personal computer 12 into contact with connector 26.

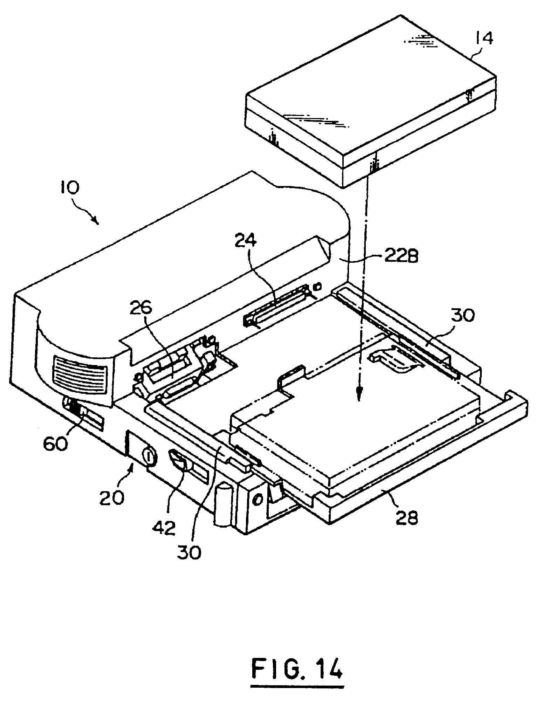

When connector 26 is in the retracted position, as shown in Figs. 14 and 15, and if the user tries inadvertently to mount personal computer 14 on tray 28, personal computer 14 will not contact connector 24 because computer 14 has a smaller size.

In the embodiment described above, although portable computers have been illustrated as two types of personal computers 12 and 14, three or more types of personal computers may be used. In such cases, three or more connectors may be provided in docking device 10. In addition, although the aforementioned embodiment contemplates one or more types of portable computers having different sizes, all types may have the same size.

As described above, the portable computer docking device in accordance with the preferred embodiment of the present invention allows two or more types of portable computers to be mounted and utilized. Further, the retractable structure employed for the connector compensates for the difference in size of portable computers and thus allows two or more types of portable computers having different sizes to be connected. Additionally, a simple, single eject mechanism permits two or more types of portable computers having different sizes to be decoupled.

## Claims

1. A docking device for providing electrical connections to a portable computer (14) mountable on the docking device, comprising:
a main body portion (20);
a retractable connector (26) for providing the electrical connections to said portable computer (14), said connector (26) being rotatably supported by said main body portion (20); and
a handling means (48, 56, 60) for rotating said connector (26) between a connectable position where said connector is connectable with said portable computer (14) and a retracted position where said connector (26) is located so as to avoid contact between the connector (26) and a portable computer (12, 14) mounted on the docking device.

2. A docking device as claimed in claim 1, comprising:
a plurality of connectors (24, 26) corresponding to two or more types of said portable computers (12, 14), said plurality of connectors each being attached to said main body portion (20) and being connectable with respective ones of said portable computers, at least one of said plurality of connectors being said retractable connector (26);
a tray (28) supported on said main body portion (20) and adapted to receive said two or more types of portable computers, the tray being reciprocally mounted for movement between a docking position where one of said portable computers (12, 14) is connected with a corresponding one of said plurality of connectors (24, 26), and a decoupling position where that portable computer (12, 14) is disconnected from the corresponding one of said plurality of connectors (24, 26).

3. A docking device as claimed in claim 2, wherein said plurality of connectors (24, 26) are attached to said main body portion (20) at different positions from each other along the direction of movement of said tray, said retractable connector (26) being projected a longer distance than other ones of said connectors along the direction of movement of said tray.

4. A docking device as claimed in claim 2 or claim 3 wherein at least one of said plurality of connectors (24, 26) is provided with an eject means (54) which interlocks with an eject mechanism (42, 40A, 40B, 40C) provided in said main body portion (20) to decouple the corresponding portable computer from that connector.

5. A docking device as claimed in any of claims 2 to 4, further comprising:
a first detection means for detecting the status of said retractable connector (26); and
a second detection means (70) for detecting the mounting on said tray of one of said portable computers (12) which is not connectable with said retractable connector (26), an alarm being generated in this instance if the first detection means indicates that said retractable connector (26) is in the connectable position.
